# EUROPÄISCHE PATENTSCHRIFT

(11) **EP 2 207 700 B1**
(45) Veröffentlichungstag und Bekanntmachung des Hinweises auf die Patenterteilung: **30.03.2011**
(21) Anmeldenummer: 08804711.3
(22) Anmeldetag: 25.09.2008
(51) Int. Cl.: B60R 1/00, B60R 11/02, G02F 1/00, H04N 5/00, H04N 9/31, B60R 11/00

(54) **KRAFTFAHRZEUG MIT EINER ANZEIGE UND EINER KAMERA**
MOTOR VEHICLE HAVING A DISPLAY AND A CAMERA
VÉHICULE MOTORISÉ COMPORTANT UN ÉCRAN ET UNE CAMÉRA

(30) Priorität: 28.09.2007 DE 102007046971
(43) Veröffentlichungstag der Anmeldung: 21.07.2010
(73) Patentinhaber: Continental Automotive GmbH, 30165 Hannover (DE)
(72) Erfinder: ENGLER, Michael, 63743 Aschaffenburg (DE); BIRKEMEYER, Daniel, 63533 Mainhausen (DE); WOLF, Jürgen, 60314 Frankfurt Am Main (DE)
(86) Internationale Anmeldenummer: PCT/EP2008/062812
(87) Internationale Veröffentlichungsnummer: WO 2009/043783

(56) Entgegenhaltungen:
- WO-A-02/43041
- DE-U1-202005 015 407
- JP-A- 2000 071 877
- US-A1- 2006 244 829

## Beschreibung

Die Erfindung betrifft ein Kraftfahrzeug mit einer Anzeige und einer Kamera. Aus dem Stand der Technik sind derartige Kraftfahrzeuge mit einer ersten Anzeige und einer ersten Kamera bekannt, wobei mit der ersten Kamera ein Umgebungsbild des hinter dem Kraftfahrzeug liegenden Teils der Umgebung des Kraftfahrzeuges aufnehmbar ist und das von der ersten Kamera aufgenommene Umgebungsbild mittels der ersten Anzeige vollständig oder teilweise darstellbar ist. Diese Anzeigen sind meist in einer Mittelkonsole des Kraftfahrzeuges angeordnet. Üblicherweise verwenden Kraftfahrer zum Beobachten des hinter den Kraftfahrzeug befindlichen Bereiches Rückspiegel, die auch außerhalb des Kraftfahrzeuges angeordnet sind und deshalb zusätzlichen Platz in der Breites des Kraftfahrzeuges erfordern und einen zusätzlichen Luftwiderstand, insbesondere bei höheren Fahrgeschwindigkeiten, bewirken. Deshalb ist vorgeschlagen worden, auf die Rückspiegel zu verzichten und Anzeigen innerhalb des Kraftfahrzeuges, beispielsweise im Bereich des Armaturenbrettes anzuordnen. Diese Anzeigen sind jedoch schlecht ablesbar und erfordern eine Anpassung der Augen an andere Entfernungen.

Aus der gattungsbildenden JP 2000 071877 A, der DE 20 2005 015 407 U1 und der US 2006/244829 A1 ist es bekannt, dass die erste Anzeige oder ein Projektor innerhalb des Kraftfahrzeuges derart angeordnet ist und dass für einen Fahrer des Kraftfahrzeuges das aufgenommene Umgebungsbild oder ein Teil des aufgenommenen Umgebungsbildes hinter einer Seitenscheibe des Kraftfahrzeuges als virtuelles Bild wahrnehmbar ist.

Aufgabe der Erfindung ist es, zusätzliche Informationen mittels einer zweiten Anzeige darzustellen. Diese Aufgabe wird dadurch gelöst, dass die erste Anzeige als Teil eines Dual-View-Displays ausgestaltet ist, wobei mittels der ersten Anzeige das Umgebungsbild dargestellt werden kann und mittels der zweiten Anzeige des Dual-View-Displays können sonstige Informationen dargestellt werden, wobei die zweite Anzeige vom Kraftfahrer direkt als reelles Bild wahrnehmbar ist.

Besonders einfach lässt sich diese Anzeige gestalten, wenn das Umgebungsbild oder Teile des Umgebungsbildes gegen die Seitenscheibe projizierbar sind, und so das Umgebungsbild oder ein Teil des Umgebungsbildes als virtuelles Bild außerhalb des Kraftfahrzeuges wahrnehmbar ist. Diese Projektion kann beispielsweise dadurch realisiert sein, dass eine reelle Anzeige oder ein Projektor im Bereich des Armaturenbrettes derart angeordnet ist, dass der Kraftfahrer das Bild der Anzeige durch eine Spiegelung in der Seitenscheibe des Kraftfahrzeuges wahrnehmen kann. So scheint das mit der ersten Anzeige dargestellte Bild oder das mittels des Projektors projizierte Bild hinter der Seitenscheibe außerhalb des Kraftfahrzeuges als virtuelles Bild zu schweben.

Wenn zusätzliche Warnhinweise darstellbar sind, können die Informationen noch umfassender sein und die Warnhinweise selbst gleichzeitig besser wahrnehmbar sein, beispielsweise können Warnhinweise bezüglich der mittels der Kamera ermittelten Verkehrsteilnehmer gegeben werden.

Wenn ein zweites Dual-View-Display vorhanden ist, kann damit eine dritte Anzeige des zweiten Dual-View-Displays ein Teil des Umgebungsbildes über eine zweite Seitenscheibe des Kraftfahrzeuges dem Kraftfahrer dargestellt werden und über eine vierte Anzeige des zweiten Dual-View-Displays dem Beifahrer Informationen dargestellt werden. Wenn eine oder zwei Seitenscheiben heruntergelassen sind und somit nicht als Reflektionsfläche für die erste bzw. dritte Anzeige dienen können, kann vorteilhafterweise die zweite Anzeige des ersten Dual-View-Displays das Umgebungsbild als reelles Bild darstellen. Anstelle der Umschaltung der Anzeige von der ersten auf die zweite Anzeige kann auch ein zusätzlicher Reflektor vorgesehen sein, der bei heruntergefahrener Seitenscheibe in die entsprechende Position bewegt werden kann, wobei der zusätzliche Reflektor transparent ausgestaltet sein kann. Wenn das Kraftfahrzeug Außenspiegel aufweist, die automatisch bei Eintritt einer bestimmten Situation oder benutzergesteuert einfahrbar sind, ist es vorteilhaft, dass bei ausgefahrenem Spiegel die erste und/oder dritte Anzeige deaktivierbar sind, da dann durch die erste bzw. dritte Anzeige keine Störung der Sicht auf die Spiegel verursacht werden kann. Diese Einfahrbarkeit ist zu einem bei hohen Geschwindigkeiten vorteilhaft, da der Luftwiderstand wesentlich reduziert wird. Bei sehr niedrigen Geschwindigkeiten, die besonders bei engen Verhältnissen, die beispielsweise in Ortsdurchfahrten oder bei Einparkvorgängen auftreten, beseitigt ein Einfahren der Spiegel die Gefahr der Beschädigung. Wenn die erste und/oder dritte Anzeige translatorisch und/oder rotatorisch beweglich sind, können die Positionen der hinter den Seitenscheiben wahrnehmbaren virtuellen Bilder für den Kraftfahrer angepasst werden. Wenn zusätzlich ein Lichtsensor und ein Dual-View-Display mit einer ersten und zweiten Anzeige vorhanden sind, kann eine Blendung des Fahrers durch die erste Anzeige des Dual-View-Displays detektiert werden. Das Dual-View-Display kann dann so in seiner Lage verändert werden, dass der Fahrer durch diese erste Anzeige nicht mehr geblendet wird. Hierdurch wird der Fahrer nicht durch die erste Anzeige gestört. Wenn dann gleichzeitig das Umgebungsbild mit der zweiten Anzeige als reelles Bild darstellbar ist, gehen dem Kraftfahrer auch keine Informationen bezüglich der Verkehrssituation hinter seinem Kraftfahrzeug verloren.

Die Erfindung wird nachfolgend anhand der Figuren näher beschrieben. Es zeigen:
- Fig. 1:: ein Ausführungsbeispiel eines Kraftfahrzeuges nach dem Stand der Technik,
- Fig. 2:: den Strahlenverlauf eines Ausführungsbeispieles des Stands der Technik mit zwei Anzeigen,
- Fig. 3:: den Strahlenverlauf eines erfindungsgemäßen Ausführungsbeispieles mit zwei Dual-View-Anzeigen,
- Fig. 4:: einen Störstrahler im Zusammenwirken mit einem Ausführungsbeispiel eines erfindungsgemäßen Dual- View-Display auf einem Kraftfahrer,
- Fig. 5:: ein Ausführungsbeispiel einer Verarbeitungs- und Steuerungseinheit für das Kraftfahrzeug.

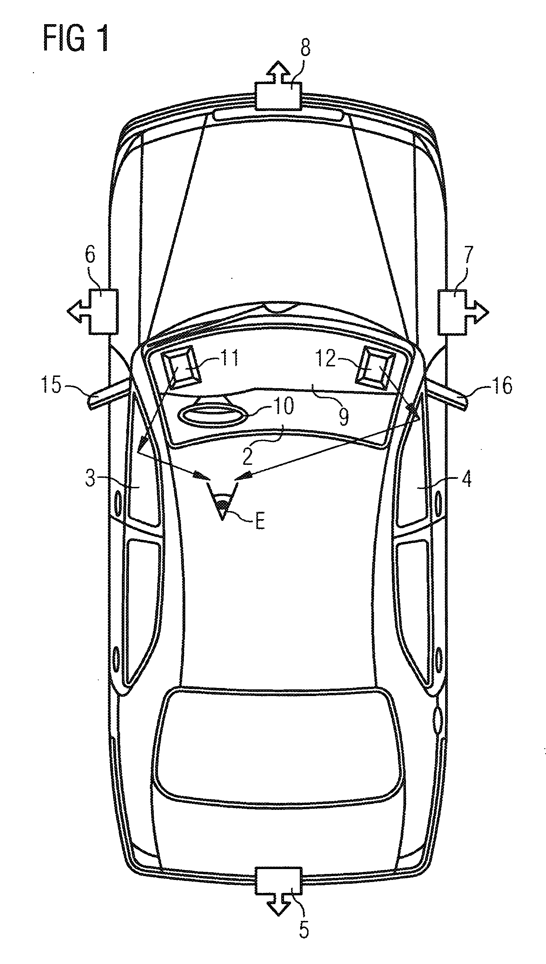

In Fig. 1 erkennt man ein Kraftfahrzeug 1 mit einer Windschutzscheibe 2, Seitenscheiben 3, 4, einer ersten Kamera 5, einer zweiten Kamera 6, einer dritten Kamera 7 und einer vierten Kamera 8. Unterhalb der Windschutzscheibe 2 erkennt man ein Armaturenbrett 9 und ein Lenkrad 10. Auf dem Armaturenbrett 9 ist eine erste Anzeige 11 und eine dritte Anzeige 12 angeordnet. Anstelle der ersten Anzeige 11 und/oder der dritten Anzeige 12 kann auch jeweils ein Projektor vorgesehen sein. Weiterhin erkennt man ein Auge eine Kraftfahrers E und außerhalb des Kraftfahrzeuges 1 angeordnete Außenspiegel 15, 16. Die erste Kamera 5 nimmt ein Umgebungsbild des hinter dem Kraftfahrzeug liegenden Teils der Umgebung des Kraftfahrzeugs auf. Diese Aufnahme wird dann mittel der ersten Anzeige 11 und/oder der dritten Anzeige 12 oder eines Projektors gegen die Seitenscheibe 3 bzw. die Seitenscheibe 4 projiziert und kann dann hinter der Seitenscheibe liegend von dem Auge des Kraftfahrers wahrgenommen werden. Im vorliegenden Ausführungsbeispiel wird eine Kamera verwendet, die nach hinten zeigt. Deshalb ist es sinnvoll, einen Teil des von der Kamera aufgenommenen Bildes über die erste Anzeige 11 und einen anderen Teil über die dritte Anzeige 12 zu projizieren, wobei die Teile der dargestellten Bilder nicht unbedingt genau halbiert sein müssen, sondern bevorzugterweise sich überlappen, da dies der Wahrnehmbarkeit des rückwärtigen Bereiches mittels eines normalen Rückspiegels am nächsten kommt. Weiterhin kann das von der zweiten Kamera 6 aufgenommene Bild ebenfalls noch mittels der ersten Anzeige 11 dargestellt werden, da dann Kraftfahrer auch Informationen über die Verkehrssituation seitlich seines Kraftfahrzeuges angeboten werden können, ebenso kann das von der dritten Kamera 7 aufgenommene Bild mittels der dritten Anzeige 12 dargestellt werden. Es ist natürlich auch möglich, noch weitere Kameras oder andere Sensoren vorzusehen und die darzustellenden Umgebungsbilder so auszuwählen, dass diese der Darstellung eines gewöhnlichen Rückspiegels möglichst nahe kommen. Die Rückspiegel 15, 16 sind wegen der besseren Wahrnehmbarkeit ausgeklappt dargestellt. Im normalen Fahrbetrieb ist es dabei vorteilhaft, die Spiegel eingeklappt bzw. eingeschwenkt oder eingefahren zu haben, damit das Kraftfahrzeug 1 einen möglichst geringen Luftwiderstand aufweist. Die Kameras 5, 6, 7, 8 sind nun beispielsweise so dargestellt, dass sie aus der Karosseriehaut herausragen, damit sie besser wahrnehmbar sind. Bei einer Realisierung eines erfindungsgemäßen Fahrzeuges wird man die Kameras 5, 6, 7, 8 jedoch aus aerodynamischen und optischen Gründen in die Karosserie integrieren.

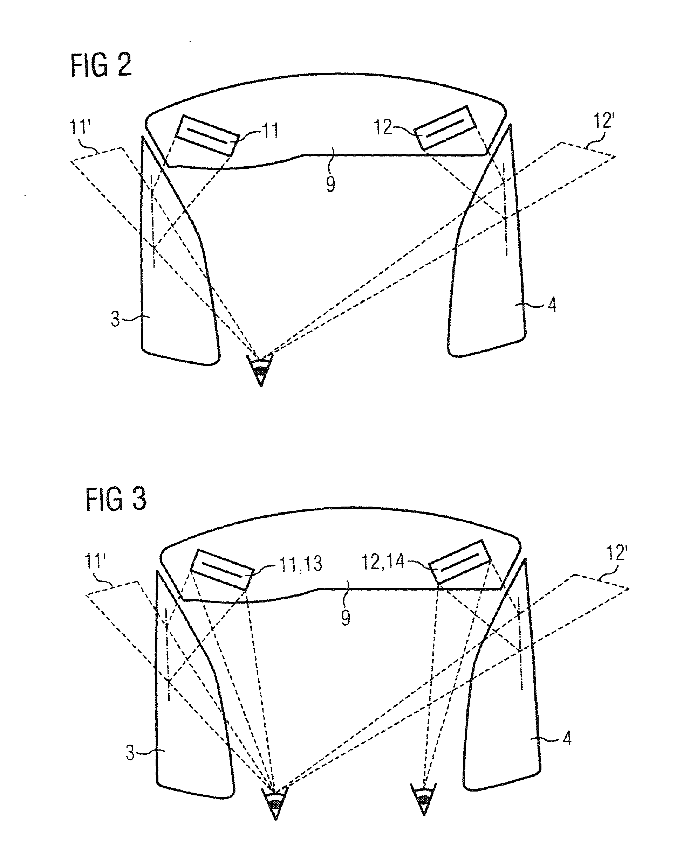

In Fig. 2 erkennt man schon die beschriebenen Seitenscheiben 3, 4, das Armaturenbrett 9, die erste Anzeige 11, die dritte Anzeige 12 und das Auge E eines Kraftfahrers. Das von der Anzeige 11 dargestellte Bild wird wider die Seitenscheibe 3 projiziert, so dass das Auge E eines Kraftfahrers ein imaginäres Bild 11' wahrnehmen kann. Das von der dritten Anzeige 12 dargestellte Bild wird gegen die Seitenscheibe 4 projiziert, so dass der Kraftfahrer ein imaginäres Bild 12' hinter der Seitenscheibe 4 wahrnehmen kann. Die dargestellten erste und dritte Anzeige 11, 12 stellen reelle Bilder dar und können beispielsweise hinterleuchtete LCDs, organische Leuchtdioden oder eine Elektronenstrahlröhre aufweisen. Es können aber auch Projektoren verwendet werden, die virtuelle Bilder über einen oder mehrere Spiegel generieren und wider die Seitenscheiben 3, 4 projizieren.

In der aus Ausführungsbeispiel der Erfindung zeigunen Fig. 3 erkennt man zusätzlich zu dem aus Fig. 2 bekannten Elementen noch eine zweite Anzeige 13 eines ersten Dual-View-Displays und eine zweite Anzeige 14 eines zweiten Dual-View-Displays. Ein Dual-View-Display ist derart gestaltet, dass es je nach Blickwinkel auf das Display eine erste Anzeige oder eine zweite Anzeige darstellt. Im vorliegenden Ausführungsbeispiel ist das erste Dual-View-Display 11, 13 derart ausgestaltet, dass die erste Anzeige 11 ihren Bildinhalt gegen die Seitenscheibe 3 projiziert, so dass der Kraftfahrer ein virtuelles Bild 11' wahrnehmen kann. Die zweite Anzeige 13 des ersten Dual-View-Displays ist derart gerichtet, dass der Kraftfahrer den Bildinhalt der dritten Anzeige 13 direkt als reelles Bild wahrnehmen kann. Das zweite Dual-View-Display mit den Anzeigen 12, 14 ist derart ausgestaltet, dass der Beifahrer mit seinen Augen EE den Bildinhalt der vierten Anzeige 14 als reelles Bild wahrnehmen kann. Der Bildinhalt der dritten Anzeige 12 kann vom Kraftfahrer mit seinem Auge E als virtuelles Bild 12' in der rechten Seitenscheibe wahrgenommen werden.

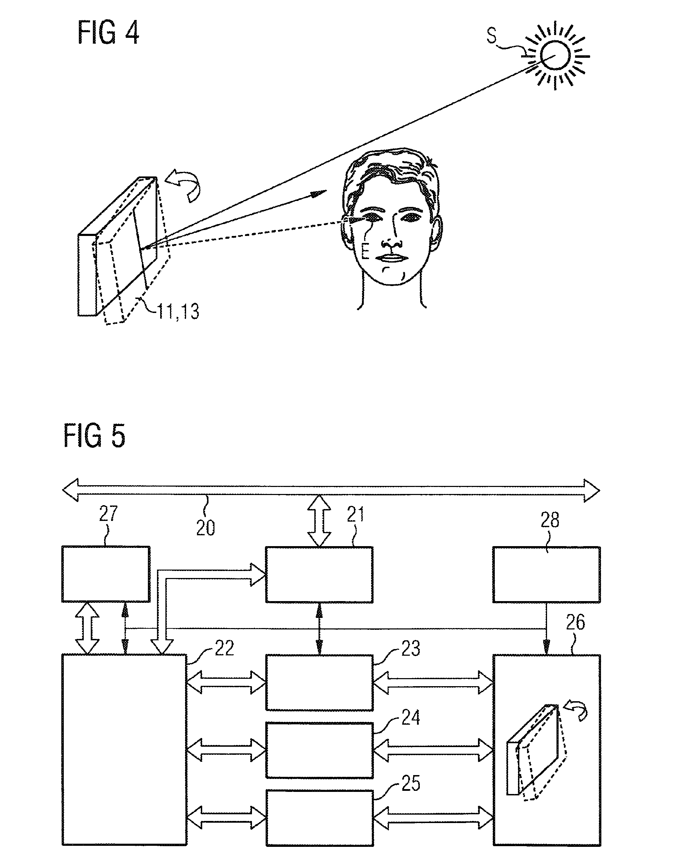

In Fig. 4 erkennt man das erste Dual-View-Display 11, 13, einen Störstrahler S und das Auge E eines Kraftfahrers. Das Dual-View-Display 11, 13 kann derart gedreht werden, dass beispielsweise bei tiefstehender Sonne, wie durch den Störstrahler S dargestellt, das erste Dual-View-Display dem Kraftfahrer nicht direkt oder durch Reflektionen in der Seitenscheibe blendet und gleichzeitig die Anzeige der ersten Kamera auf der zweiten Anzeige 13 des Dual-View-Displays als reelles Bild dargestellt wird.

Fig. 5 zeigt ein Ausführungsbeispiel einer möglichen Verarbeitungs- und Steuerungseinheit für die ersten bis vierten Anzeigen und die Außenspiegel. Man erkennt ein Netzwerk 20, einen Übertrager 21, ein Verarbeitungsmodul 22, einen Treiber-Lichtsensor 23, einen Treiber-Verstellmotoren 24, einen Treiber-Position Seitenscheibe/ Seitenspiegel 25, Verstellmotoren 26 des ansonsten nicht dargestellten Dual-View-Displays, einen Speicher 27, und eine Spannungsversorgung 28. Die Übertragung aller notwendigen Datensätze, wie beispielsweise Störlichthelligkeit, Störlichteinfallswinkel, Lenkbewegung, Displaytyp und Navigation- oder Positionsdaten für die Displaynachführung erfolgt über das Netzwerk 20, das beispielsweise als CAM, K-line oder MOS ausgeführt sein kann. Der Übertrager 21 empfängt die Daten und stellt sie dem programmierbaren Verarbeitungsmodul 22 zur Verfügung. Das Verarbeitungsmodul 22 bereitet die Informationen mithilfe des Speichers 27 auf. Der Speicher 27 beinhaltet alle zum Betrieb der Displaynachführung notwendigen Parameter und Daten (z. B. die Position der Seitenscheiben, Isokontrastdaten, Reflektionstyp, Abstrahlwinkel des Dual-View-Segments für die zur Nachführung benötigten Treiber auf:
a) Ein Verstellmotortreiber ermöglicht die Lagesteuerung des Dual-View-Displays,
b) Ein Darstellungstreiber steuert die Hintergrund- oder Frontbeleuchtung sowie die Verlagerung des Bildes derart, dass die zweite Anzeige wahrnehmbar wird
c) ein Lichtsensortreiber überträgt die Lichtintensität - und die Lichteinfallswinkeldaten.

Treiber a) und b) arbeiten zum Teil auch bidirektional, z. B. ist eine Überprüfung der eingestellten Parameter oder sogar der Einsatz von Regelungen, insbesondere bei den Verstellmotoren möglich. Die zum Betrieb der Displaynachführung notwendigen Spanungen werden über die Spannungsversorgung 28 aus dem Bordspannungsnetz übertragen und aufbereitet. Es ist auch möglich, ein "Teach-In"-Modul zu verwenden, durch das spezielle Displayparameter geladen werden können, die das Regel- oder Nachführungsverhalten des Displays beeinflussen. Als "Teach-In"-Parameter kommen folgende Parameter in Betracht:
- Isokontrastdaten,
- Displaytyp,
- Reflektortyp,
- Seitenscheibentyp,
- Position der Seitenscheibe,
- Abstrahlwinkel der Dual-View-Ansichten,
- Entspiegelungsparameter (beispielsweise der Entspiegelungsgrad über die Wellenlänge).

## Patentansprüche

1. Kraftfahrzeug (1), das eine erste Anzeige (11) und eine erste Kamera (5) aufweist, wobei mit der ersten Kamera (9) ein Umgebungsbild des hinter dem Kraftfahrzeug liegenden Teils der Umgebung des Kraftfahrzeug (1) aufnehmbar ist und das von der ersten Kamera (9) aufgenommene Umgebungsbild mittels der ersten Anzeige oder eines Projektors (11) vollständig oder teilweise darstellbar ist, wobei die erste Anzeige (11) oder der Projektor innerhalb des Kraftfahrzeuges (1) derart angeordnet ist, dass für einen Fahrer (E) des Kraftfahrzeuges (1) das aufgenommene Umgebungsbild oder ein Teil des aufgenommenen Umgebungsbildes hinter einer Seitenscheibe (3, 4) des Kraftfahrzeuges (1) als virtuelles Bild (11', 12') wahrnehmbar ist, **dadurch gekennzeichnet, dass** die erste Anzeige (11) als Teil eines ersten Dual-View-Displays (11, 13) ausgestaltet ist, dass die erste Anzeige des Dual-View-Displays (11, 13) über die die Seitenscheibe (13) als virtuelles Bild (11') wahrnehmbar ist, dass die zweite Anzeige (13) des Dual-View-Displays als reelles Bild wahrnehmbar ist.

2. Kraftfahrzeug (1) nach Anspruch 1, **dadurch**
**gekennzeichnet, dass** das Umgebungsbild oder Teile des Umgebungsbildes gegen eine Seitenscheibe (3, 4) projizierbar ist und so das Umgebungsbild oder der Teil des Umgebungsbildes als virtuelles Bild (11', 12') außerhalb des Kraftfahrzeuges (1) wahrnehmbar ist.

3. Kraftfahrzeug nach Anspruch 1 oder Anspruch 2,
**dadurch gekennzeichnet, dass** die erste Anzeige (11) oder der Projektor im Armaturenbrett angeordnet ist.

4. Kraftfahrzeug (1) nach einem der vorstehenden Ansprüche, **dadurch gekennzeichnet, dass** mit der ersten Anzeige (11) zusätzliche Warnhinweise darstellbar sind.

5. Kraftfahrzeug (1) nach einem der vorstehenden Ansprüche, **dadurch gekennzeichnet, dass** mit der ersten Anzeige (11) ein reelles Bild erzeugbar ist.

6. Kraftfahrzeug (1) nach einem der vorstehenden Ansprüche, **dadurch gekennzeichnet, dass** ein zweites Dual-View-Display mit einer dritten und vierten Anzeige vorhanden ist, dass die dritte Anzeige (12) für den Fahrer (E)als virtuelles Bild (12')wahrnehmbar ist, dass die vierte Anzeige (14) für einen Beifahrer als reelles Bild wahrnehmbar ist.

7. Kraftfahrzeug (1) nach einem der vorstehenden Ansprüche, **dadurch gekennzeichnet, dass** das Umgebungsbild auf einer zweiten oder vierten Anzeige (13, 14) als reelles Bild darstellbar ist, wenn die entsprechende Seitenscheibe (3, 4) heruntergelassen ist.

8. Kraftfahrzeug (1) nach einem der vorstehenden Ansprüche, **dadurch gekennzeichnet, dass** ein zusätzlicher Reflektor im Bereich der Seitenscheibe bei heruntergelassener Seitenscheibe (3, 4) vorhanden ist.

9. Kraftfahrzeug (1) nach einem der vorstehenden Ansprüche, **dadurch gekennzeichnet, dass** es Außenspiegel (15, 16) aufweist, die automatisch bei Eintritt einer bestimmten Situation oder benutzergesteuert einfahrbar sind, dass bei ausgefahrenem Spiegel (15, 16) die erste bzw. dritte Anzeige (11, 13) deaktiviert ist.

10. Kraftfahrzeug (1) nach einem der vorstehenden Ansprüche, **dadurch gekennzeichnet, dass** die erste und/oder dritte Anzeige (11, 13) translatorisch beweglich sind.

11. Kraftfahrzeug (1) nach einem der vorstehenden Ansprüche, **dadurch gekennzeichnet, dass** die erste und/oder dritte Anzeige (11, 12) rotatorisch beweglich sind.

12. Kraftfahrzeug (1) nach einem der Ansprüche 9, 10 oder 11, **dadurch gekennzeichnet, dass** es einen Lichtsensor und ein Dual-View-Display (11, 13) aufweist, das bei einer Blendung des Fahrers (E)durch die erste Anzeige (11) des Dual-View-Display (11, 13) so in seiner Lage veränderbar ist, dass der Fahrer (E) durch diese erste Anzeige (11) nicht geblendet wird.

13. Kraftfahrzeug (1) nach Anspruch 11, **dadurch gekennzeichnet, dass** das Umgebungsbild mit der zweiten Anzeige (13) als reelles Bild darstellbar ist.

## Claims

1. Motor vehicle (1) that has a first display (11) and a first camera (5), the first camera (9) being able to record an image of the surroundings of the part of the surroundings of the motor vehicle (1) lying behind the motor vehicle, and the first display or a projector (11) being able to display completely or partially the image of the surroundings recorded by the first camera (9), the first display (11) or the projector being arranged inside the motor vehicle (1) in such a way that a driver (E) of the motor vehicle (1) can perceive the recorded image of the surroundings or a part of the recorded image of the surroundings as a virtual image (11', 12') behind a side pane (3, 4) of the motor vehicle (1), **characterized in that** the first display (11) is designed as part of a first dual view display (11, 13), **in that** the first display of the dual view display (11, 13) can be perceived as a virtual image (11') via the side pane (13), and **in that** the second display (13) of the dual view display can be perceived as a real image.

2. Motor vehicle (1) according to Claim 1, **characterized in that** the image of the surroundings or parts of the image of the surroundings can be projected against a side pane (3, 4), and so the image of the surroundings or the part of the image of the surroundings can be perceived as a virtual image (11', 12') outside the motor vehicle (1).

3. Motor vehicle according to Claim 1 or claim 2, **characterized in that** the first display (11) or the projector is arranged in the dashboard.

4. Motor vehicle (1) according to one of the preceding claims, **characterized in that** additional warning indications can be displayed with the first display (11).

5. Motor vehicle (1) according to one of the preceding claims, **characterized in that** a real image can be produced with the first display (11).

6. Motor vehicle (1) according to one of the preceding claims, **characterized in that** a second dual view display with a third and fourth display is present, **in that** the driver (E) can perceive the third display (12) as a virtual image (12'), and **in that** a front seat passenger can perceive the fourth display (14) as a real image.

7. Motor vehicle (1) according to one of the preceding claims, **characterized in that** the image of the surroundings can be displayed as a real image on a second or fourth display (13, 14) when the corresponding side pane (3, 4) is let down.

8. Motor vehicle (1) according to one of the preceding claims, **characterized in that** an additional reflector is present in the region of the side pane with the side pane (3, 4) let down.

9. Motor vehicle (1) according to one of the preceding claims, **characterized in that** it has external mirrors (15, 16) that can be retracted automatically under the user's control upon the occurrence of a specific situation, and **in that** the first or the third display (11, 13) respectively is deactivated with the mirror (15, 16) extended.

10. Motor vehicle (1) according to one of the preceding claims, **characterized in that** the first and/or third display (11, 13) can be moved translationally.

11. Motor vehicle (1) according to one of the preceding claims, **characterized in that** the first and/or third display (11, 12) can be moved rotationally.

12. Motor vehicle (1) according to any one of Claims 9, 10 and 11, **characterized in that** it has a light sensor and a dual view display (11, 13) whose position can be changed upon dazzling of the driver (E) by the first display (11) of the dual view display (11, 13) such that the driver (E) is not dazzled by this first display (11).

13. Motor vehicle (1) according to Claim 11, **characterized in that** the image of the surroundings can be displayed as a real image with the second display (13).

## Revendications

1. Véhicule automobile (1) comportant un premier affichage (11) et une première caméra (5), où il est possible d'enregistrer, avec la première caméra (5), une vue de la partie de l'environnement se trouvant derrière le véhicule automobile (1) et de représenter, au moyen du premier affichage ou d'un projecteur (11), complètement ou en partie, la vue de l'environnement enregistrée par la première caméra (5), où le premier affichage (11) ou le projecteur sont disposés à l'intérieur du véhicule automobile de manière telle que, pour un conducteur (E) du véhicule automobile (1), la vue de l'environnement enregistrée ou une partie de la vue de l'environnement enregistrée est perçue en temps qu'image virtuelle (11', 12') derrière une vitre latérale (3, 4) du véhicule automobile (1), **caractérisé par le fait que** le premier affichage (11) est conçu en tant que partie d'un premier écran double-affichage (11, 13) (ou, en anglais, dual-view-display), que le premier affichage de l'écran double-affichage (11, 13) peut être perçu en tant qu'image virtuelle (11') par l'intermédiaire de la vitre latérale (13), que le deuxième affichage (13) de l'écran double-affichage peut être perçu en tant qu'image réelle.

2. Véhicule automobile (1) selon la revendication 1, **caractérisé par le fait que** la vue de l'environnement ou les parties de la vue de l'environnement peuvent être projetées sur une vitre latérale (3, 4) et que, ainsi, la vue de l'environnement ou les parties de la vue de l'environnement peuvent être perçues en tant qu'image virtuelle (11', 12') à l'extérieur du véhicule automobile (1).

3. Véhicule automobile (1) selon la revendication 1 ou la revendication 2, **caractérisé par le fait que** le premier affichage (11) ou le projecteur sont placés dans le tableau de bord.

4. Véhicule automobile (1) selon l'une des revendications précédentes, **caractérisé par le fait que**, avec le premier affichage (11), il est possible de représenter des informations supplémentaires de mise en garde.

5. Véhicule automobile (1) selon l'une des revendications précédentes, **caractérisé par le fait que**, avec le premier affichage (11), il est possible de générer une image réelle.

6. Véhicule automobile (1) selon l'une des revendications précédentes, **caractérisé par le fait qu'**il existe un deuxième écran double-affichage avec un troisième et un quatrième affichage, que le troisième affichage (12) est perçu par le conducteur (E) en tant qu'image virtuelle (12'), que le quatrième affichage (14) est perçu par un passager en tant qu'image réelle.

7. Véhicule automobile (1) selon l'une des revendications précédentes, **caractérisé par le fait qu'**il est possible de représenter la vue de l'environnement en tant qu'image réelle sur un deuxième ou un quatrième affichage (13, 14), lorsque la vitre latérale correspondante (3, 4) est abaissée.

8. Véhicule automobile (1) selon l'une des revendications précédentes, **caractérisé par le fait qu'**il existe un réflecteur supplémentaire à proximité de la vitre latérale lorsque la vitre latérale (3, 4) est abaissée.

9. Véhicule automobile (1) selon l'une des revendications précédentes, **caractérisé par le fait qu'**il comporte des rétroviseurs extérieurs (15, 16) qui peuvent être escamotés automatiquement lorsqu'une situation déterminée se présente ou lorsqu'ils sont commandés par l'utilisateur, que, lorsque les rétroviseurs (15, 16) sont déployés, le premier et le troisième affichage (11, 13) sont désactivés.

10. Véhicule automobile (1) selon l'une des revendications précédentes, **caractérisé par le fait que** le premier et / ou le troisième affichage (11, 13) sont mobiles en translation.

11. Véhicule automobile (1) selon l'une des revendications précédentes, **caractérisé par le fait que** le premier et/ou le troisième affichage (11, 13) sont mobiles en rotation.

12. Véhicule automobile (1) selon l'une des revendications 9, 10 ou 11, **caractérisé par le fait qu'**il comporte un détecteur de lumière ou un écran double-affichage (11, 13), dont la position, dans le cas où le conducteur (E) est ébloui par le premier affichage (11) de l'écran double-affichage (11, 13), peut être modifiée de manière telle que le conducteur (E) n'est plus ébloui par ce premier affichage (11).

13. Véhicule automobile (1) selon la revendication 11, **caractérisé par le fait que** la vue de l'environnement peut être représentée en tant qu'image réelle avec le premier affichage (13).
